(19) Europäisches Patentamt
European Patent Office
Office européen des brevets

(11) Veröffentlichungsnummer : **0 144 806**
**B1**

(12) # EUROPÄISCHE PATENTSCHRIFT

(45) Veröffentlichungstag der Patentschrift : **04.03.87**

(51) Int. Cl.⁴ : **C 07 F 7/00**

(21) Anmeldenummer : **84113615.3**

(22) Anmeldetag : **12.11.84**

(54) **Verfahren zur Herstellung von Dimethylsilyldicyanid.**

(30) Priorität : **25.11.83 DE 3342690**

(43) Veröffentlichungstag der Anmeldung : **19.06.85 Patentblatt 85/25**

(45) Bekanntmachung des Hinweises auf die Patenterteilung : **04.03.87 Patentblatt 87/10**

(84) Benannte Vertragsstaaten : **BE CH DE FR GB IT LI NL**

(56) Entgegenhaltungen :
**ZEITSCHRIFT FÜR ANORGANISCHE UND ALLGEMEINE CHEMIE, Band 345, 1966, Seiten 23-28, J. HUNDECK: "Zur Darstellung von Methyl- und Methyldialkylamino-cyanosilanen"**

(73) Patentinhaber : **BAYER AG**
**Konzernverwaltung RP Patentabteilung**
**D-5090 Leverkusen 1 Bayerwerk (DE)**

(72) Erfinder : **Findeisen, Kurt, Dr.**
**In der Follmühle 10**
**D-5068 Odenthal 2 (DE)**
Erfinder : **Fauss, Rudolf, Dr.**
**Gerstenkamp 10**
**D-5000 Köln 80 (DE)**

**EP 0 144 806 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein neues Verfahren zur Herstellung von Dimethylsilyldicyanid.

Es ist bekannt, Dialkylsilyldicyanide durch Umsetzung von Dialkylsilyldichloriden mit Silbercyanid herzustellen. Bei diesem Verfahren werden teure Ausgangsprodukte eingesetzt. Das Verfahren liefert nur dann gute Ausbeuten, wenn lange Reaktionszeiten gewählt werden (Synthesis 178, S. 154).

Es wurde nun gefunden, daß man Dimethylsilyldicyanid erhält, wenn man Dimethylsilyldichlorid mit Trimethylsilylcyanid umsetzt.

Diese Reaktion war überraschend. So kann zwar Trimethylsilylchlorid mit Alkalicyanid in Gegenwart von Schwermetallcyaniden als Katalysatoren und in aprotischen Lösungsmitteln zwischen 130 und 250 °C zur Reaktion gebracht werden. Dimethylsilyldichlorid reagiert jedoch unter den gleichen Bedingungen nicht zum gewünschten Dimethylsilyldicyanid.

Es war daher erstaunlich, daß die Umsetzung von Dimethylsilyldichlorid mit Trimethylsilylcyanid ohne Schwierigkeiten und mit guten Ausbeuten verläuft.

Mit Hilfe des erfindungsgemäßen Verfahrens läßt sich somit Dimethylsilyldicyanid schneller und billiger erhalten als nach den bekannten Verfahren.

Der Reaktionsablauf des erfindungsgemäßen Verfahrens kann durch folgendes Formelschema wiedergegeben werden :

$$(CH_3)_2SiCl_2 + 2(CH_3)_3SiCN \rightarrow (CH_3)_2Si(CN)_2 + (CH_3)_3SiCl$$

Zur Durchführung der Reaktion werden die Ausgangskomponenten zusammengegeben und erhitzt. Es kann aber auch eine beliebige der beiden Ausgangskomponenten vorgelegt werden und die andere Komponente bei der gewünschten Reaktionstemperatur zudosiert werden.

Bevorzugt wird Trimethylsilylcyanid vorgelegt, auf Reaktionstemperatur erhitzt und anschließend Dimethylsilyldichlorid zugegeben.

Pro Mol Dimethylsilyldichlorid werden mindestens 2 Mol Trimethylsilylcyanid, bevorzugt 2,2-6 Mol Trimethylsilylcyanid eingesetzt.

Die Reaktion wird zwischen 50 und 250 °C, bevorzugt zwischen 80 und 180 °C durchgeführt. Besonders bevorzugt wird beim Siedepunkt des Reaktionsgemisches gearbeitet.

Die Reaktion verläuft bereits ohne Katalysatoren und Hilfsstoffe befriedigend. Bevorzugt werden jedoch Katalysatoren vom Typ der Lewis-Säuren wie z. B. Aluminiumchlorid, Eisen-III-chlorid, Antimon-V-chlorid, Bortrifluorid, Titan-IV-chlorid, Zinkchlorid, Zinn-IV-chlorid, Kupfer-I-chlorid, Kupfer-I-cyanid, Zinkiodid und Gemische dieser Verbindungen verwendet. Besonders bevorzugt sind als Katalysatoren Aluminiumchlorid, Eisen-III-chlorid, Zinkchlorid sowie ihre Gemische.

Im Normalfall wird die Reaktion ohne Lösungsmittel durchgeführt. In bestimmten Fällen kann die Verwendung von gegenüber Produkten und Edukten inerten Lösungsmitteln sinnvoll sein.

Beispielsweise seien folgende Lösungsmittel genannt : Toluol, Chlorbenzol, Dichlorbenzol, Trichlorbenzol, Nitrobenzol, Tetramethylensulfon, Tetramethylharnstoff, N-Methylpyrolidon.

Die Umsetzung wird bei Normaldruck durchgeführt, kann in bestimmten Fällen aber auch unter vermindertem oder erhöhtem Druck ablaufen.

Bevorzugt wird das bei der Reaktion entstehende Trimethylsilylchlorid während der Reaktion laufend abdestilliert. Die Reaktion kann sowohl kontinuierlich als auch diskontinuierlich durchgeführt werden. Die Herstellung des Dimethylsilyldicyanids kann direkt mit der Synthese des Trimethylsilylcyanids gekoppelt werden. Für diesen Fall lassen sich folgende Reaktionsgleichungen aufstellen :

$$2\,(CH_3)_3SiCl + 2\,NaCN \rightarrow 2\,(CH_3)_3SiCN + NaCl$$

(Gleichung 1)

$$2\,(CH_3)_3SiCN + (CH_3)_2SiCl_2 \rightarrow 2\,(CH_3)_3SiCl + (CH_3)_2Si(CN)_2$$

(Gleichung 2)

$$(CH_3)_2SiCl_2 + 2\,NaCN \rightarrow (CH_3)_2Si(CN)_2 + 2\,NaCl$$

(Gleichung 3)

Die Zusammenfassung von Gleichung 1 und Gleichung 2 liefert Gleichung 3.

Im folgenden soll die Durchführung des erfindungsgemäßen Verfahrens durch Kopplung mit der Herstellung von Trimethylsilylcyanid beschrieben werden. Trimethylsilylcyanid wird in guter Ausbeute erhalten, indem man Trimethylsilylchlorid mit der etwa äquimolaren Menge eines Alkylicyanids in Gegenwart einer katalytischen Menge eines Schwermetallcyanids und in Gegenwart eines oberhalb von 150 °C siedenden, aprotischen Lösungsmittels bei Temperaturen zwischen 130 und 250 °C umsetzt und

das Trimethylsilylcyanid in Maße seiner Entstehung durch Destillation aus dem Reaktionsgemisch entfernt, wobei gegebenenfalls nicht-umgesetztes, gleichzeitig mitdestilliertes Trimethylsilylchlorid durch Verdampfung vom Trimethylsilylcyanid abgetrennt und bis zur seiner vollständigen Umsetzung im Kreislauf in das Reaktionsgefäß zurückgeführt wird (vergleiche DE-OS 3 018 821).

Wird nun in das aus der Reaktion abdestillierte Trimethylsilylcyanid Dimethylsilyldichlorid eingebracht, so reagiert das Trimethylsilylcyanid sofort weiter zu Trimethylsilylchlorid und es entsteht Dimethylsilyldicyanid. Das dabei sich bildende Trimethylsilylchlorid, wird mit dem aus der Synthese des Trimethylsilylcyanids nicht reagiertem Anteil destillativ abgetrennt und zurückgeführt.

Das Trimethylsilylchlorid wird also im Kreislauf gefahren. Die Abtennung von Trimethylsilylchlorid kann durch eine entsprechende Apparatur — z. B. eine gute Kolonne — erleichtert werden.

Das anfallende Rohprodukt wird destillativ aufgearbeitet, wobei es sinnvoll ist nach Abnahme des Vorlaufs das fast rein zurückbleibende Dimethylsilyldicyanid zügig zu destillieren, gegebenenfalls unter vermindertem Druck um Sumpftemperaturen über 200 °C zu vermeiden.

Die Reaktion soll möglichst so durchgeführt werden, daß das Dimethyldichlorislan vollständig umgesetzt wird. Dies ist beispielsweise dadurch zu erreichen, daß Dimethylsilyldichlorsilan in die Reaktionslösung unter intensivem Rühren eingeleitet wird.

Es ist aber auch möglich eventuell mit dem Trimethylsilylchlorid mitgerissenes unumgesetztes Dimethyldichlorsilan über eine gute Kolonne zu trennen und zu recyclisieren.

## Beispiel 1

2 000 g (20 Mol) Trimethylsilylcyanid wurden mit 5 g $ZnCl_2$ zum Rückfluß erhitzt und langsam 1 032 g (8 Mol) Dimethylsilyldichlorid zugetropft. Das entstehende Trimethylsilylchlorid wurde über eine 30 cm Füllkörperkolonne kontinuierlich abdestilliert. Anschließend wurde der Sumpf destillativ aufgearbeitet. Als Vorlauf fiel zuerst Trimethylsilylchlorid, dann überschüssiges Trimethylsilylcyanid an. Anschließend wurde der Sumpf ohne Füllkörperkolonne destillativ aufgearbeitet. Es wurden 730 g Dimethylsilyldicyanid zügig überdestilliert Kp. 165-175 °C.

## Beispiel 2

In einem 4 l-Vierhalskolben (versehen mit Rührer, Thermometer, Zulaufrohr, das mit einem Vorratsgefäß für $(CH_3)_3SiCl$ verbunden ist, und aufgesetzter kurzer Kolonne) wurden 200 g (4 Mol) 98 %iges Natriumcyanid und 20 g (0,22 Mol) Kupfer-(I)-cyanid in 1 000 ml trockenem Tetramethylensulfon vorgelegt und auf 180 bis 190 °C erwärmt. Bei dieser Temperatur wurden 488 g (4,5 Mol) Trimethylsilylchlorid (gaschromatographisch bestimmter Gehalt : 98,6 %) zugepumpt. Das im Reaktionsverlauf gebildete Trimethylsilylcyanid wurde ständig aus dem Reaktionsgemisch über die aufgesetzte kurze Kolonne und eine anschließende Destillationsbrücke in einen auf 90 °C gehaltenen 2 l-Vierhalskolben (versehen mit Rührer, Thermometer, Zuführungsrohr von der vorerwähnten Destillationsbrücke und aufgesetzter 60 cm Füllkörperkolonne sowie mit Bodenablaßventil) geführt.

Während der Reaktion wurden — entsprechend dem Verbrauch — dem Sulfolan-Sumpf in 3 Portionen insgesamt 1 000 g (20 Mol) Natriumcyanid zugesetzt.

In dem Auffangkolben (2 l-Vierhalskolben) waren 3 g $ZnCl_2$ vorgelegt worden.

Nachdem fast das gesamte Trimethylsilylchlorid umgesetzt war, wurde der Inhalt des Auffangkolbens zum Rückfluß erhitzt. Dann wurde unter heftigem Rühren unter die Flüssigkeitsoberfläche im Lauf von 10 Stunden 1 300 g (10 Mol) Dimethylsilyldichlorid eingepumpt.

Das bei der Umsetzung mit Dimethylsilyldichlorid im Auffangkolben entstehende sowie das beim Abdestillieren des Trimethylsilylcyanids mitgerissene Trimethylsilylchlorid wurde destillativ über die Füllkörperkolonne abgetrennt und in das Vorratsgefäß und damit im Kreislauf in das Reaktionsgefäß zur Umsetzung des Natriumcyanids zurückgeführt. Während der Reaktion stieg die Sumpftemperatur im Auffangkolben unter Rückflußbedingungen von 110 auf ca. 130 °C an.

Nachdem alles Natriumcyanid umgesetzt war, wurde aus dem Auffanggefäß über die Kolonne ein Vorlauf abgenommen (Kp. 62-118 °C ; 220 g ; 90 % Trimethylsilylcyanid, 10 % Trimethylsilylchlorid nach GC).

Anschließend wurde der noch warme Sumpf über das Bodenablaßventil in einen 2 l Kolben (10 cm Vigrieux-Kolonne, Destillationsbrücke) überführt und destillativ aufgearbeitet :

| Fraktion | Druck (mm Hg) | Temperatur | Menge |
|---|---|---|---|
| 1 | 760 | 120 - 142 | 120 g |
| 2 | 760 | - 160 | 70 g |
| 3 | 14 | 60 - 70 | 935 g |

Fraktion 1 wurde gaschromatographisch untersucht (Trimethylsilylcyanid), Fraktionen 2 und 3 kernresonanzspektroskopisch. Fraktion 2 bestand aus Trimethylsilylcyanid und Dimethylsilyldicyanid im Molverhältnis 30 : 70. Fraktion 3 bestand nur aus Dimethylsilyldicyanid.

Die Ausbeute an Dimethylsilyldicyanid, bezogen auf eingesetztes Dimethylsilyldichlorid betrug 85 % d. Th.

Beispiel 3

1 000 g (10 Mol) Trimethylsilylcyanid wurden beim Rückfluß erhitzt und langsam 516 g (4 Mol) Dimethylsilyldichlorid zugetropft. Das Gemisch wurde 6 Stunden am Rückfluß erhitzt. Anschließend wurde über eine 30 cm Füllkörperkolonne zuerst Trimethylsilylchlorid und dann überschüssiges Trimethylsilylcyanid abdestilliert. Danach wurden 360 g Dimethylsilyldicyanid Kp 165-175 °C zügig über eine Brücke destilliert.

## Patentansprüche

1. Verfahren zur Herstellung von Dimethylsilyldicyanid dadurch gekennzeichnet, daß Trimethylsilylcyanid mit Dimethylsilyldichlorid gegebenenfalls in Anwesenheit von Katalysatoren und/oder Verdünnungsmitteln umgesetzt wird.
2. Verfahren gemäß Anspruch 1, dadurch gekennzeichnet, daß das während der Umsetzung gebildete Trimethylsilylchlorid laufend aus der Reaktion entfernt wird.
3. Verfahren gemäß Anspruch 1, dadurch gekennzeichnet, daß als Katalysatoren Lewis-Säuren verwendet werden.
4. Verfahren gemäß Anspruch 1, dadurch gekennzeichnet, daß zwischen 50 und 250 °C gearbeitet wird.

## Claims

1. Process for preparing dimethylsilyl dicyanide, characterised in that trimethylsilyl cyanide is reacted with dimethylsilyl dichloride if appropriate in the presence of catalysts and/or diluents.
2. Process according to Claim 1, characterised in that the trimethylsilyl chloride formed in the course of the reaction is continuously removed from the reaction.
3. Process according to Claim 1, characterised in that the catalysts used are Lewis acids.
4. Process according to Claim 1, characterised in that the reaction is carried out at between 50 and 250 °C.

## Revendications

1. Procédé de production de dicyanure de diméthylsilyle, caractérisé en ce qu'on fait réagir du cyanure de triméthylsilyle avec du dichlorure de diméthylsilyle, éventuellement en présence de catalyseurs et/ou de diluants.
2. Procédé suivant la revendication 1, caractérisé en ce que le chlorure de triméthylsilyle formé pendant la réaction est continuellement éliminé de la réaction.
3. Procédé suivant la revendication 1, caractérisé en ce qu'on utilise des acides de Lewis comme catalyseurs.
4. Procédé suivant la revendication 1, caractérisé en ce qu'on opère entre 50 et 250 °C.